# EUROPÄISCHE PATENTSCHRIFT

(11) **EP 2 927 043 B1**
(45) Veröffentlichungstag und Bekanntmachung des Hinweises auf die Patenterteilung: **01.07.2020**
(21) Anmeldenummer: 15159381.1
(22) Anmeldetag: 17.03.2015
(51) Int. Cl.: B60K 37/06, G06F 3/14

(54) **Bedienverfahren und Bediensystem in einem Fahrzeug**
Operating method and operating system in a vehicle
Procédé et système de commande dans un véhicule

(30) Priorität: 31.03.2014 DE 102014206036
(43) Veröffentlichungstag der Anmeldung: 07.10.2015
(73) Patentinhaber: Volkswagen Aktiengesellschaft, 38440 Wolfsburg (DE)
(72) Erfinder: Jun, Mi-Ran, 10965 Berlin (DE); Petersen, Sönke, 12205 Berlin (DE); Budzynski, Tobias, 13503 Berlin (DE)

(56) Entgegenhaltungen:
- DE-A1-102009 019 561
- DE-A1-102010 012 240

## Beschreibung

Die Erfindung betrifft ein Bedienverfahren und ein Bediensystem in einem Fahrzeug.

Ursprünglich wurden verschiedene in einem Kraftfahrzeug vorgesehenen Einrichtungen über separate Bedienelemente bedient. Beispielsweise gab es Drehschalter zum Einstellen der Lüftung sowie der Temperatur, Schalter zum Einstellen der verschiedenen Lüftungsdüsen, Schalter zum Bedienen der Beleuchtungseinrichtungen für den Innenraum des Fahrzeugs, entsprechende Schalter für die Beleuchtungs- und Scheinwerfereinrichtungen außen am Fahrzeug und Bedienelemente für ein Radio oder einen CD-Spieler. Bei modernen Kraftfahrzeugen sind mittlerweile so viele Einrichtungen zum Einstellen verschiedener Fahrzeugfunktionen, Informationssysteme, einschließlich Fahrerassistenzsysteme und Unterhaltungssysteme, vorgesehen, dass es nicht mehr zweckmäßig ist, für alle Fahrzeugeinrichtungen separate Bedienelemente vorzusehen. Aus diesem Grund erfolgt die Bedienung der vielfältigen Fahrzeugeinrichtungen über ein einheitliches Bedienkonzept mit wenigen Bedienelementen, die in Verbindung mit einer Anzeigevorrichtung bedient werden.

Die Bedienung der verschiedenen Einrichtungen des Fahrzeugs und die Aufnahme der angezeigten Informationen, die von diesen Einrichtungen geliefert werden, sollen jedoch die Aufmerksamkeit des Fahrers des Fahrzeugs so wenig wie möglich beanspruchen. Es ist daher wünschenswert, die Informationen im Fahrzeug so darzustellen, dass sie schnell und intuitiv vom Fahrer aufgenommen werden können, so dass das Erfassen der dargestellten Informationen nicht zu einer Ablenkung des Fahrers während der Fahrt führt. Ferner soll die Bedienung so intuitiv, einfach und schnell durchführbar sein, dass der Fahrer die Einrichtungen des Fahrzeugs, deren Informationen von der Anzeigeeinrichtung dargestellt werden, auch während der Fahrt bedienen kann. Die Art der Bedienung und die mit der Bedienung verbundene Informationsdarstellung in einem Fahrzeug trägt somit zur Sicherheit beim Führen dieses Fahrzeugs bei.

Aus der DE 10 2007 029 602 A1 ist ein Verfahren und eine Vorrichtung zum Bedienen in einer in einem Fahrzeug befindlichen Einrichtung bekannt. Bei dem in dieser Druckschrift beschriebenen Verfahren werden vor einem Mitfahrer des Fahrzeugs auf eine Projektionsfläche die Bedienfelder und die Anzeige einer Einrichtung im Fahrzeug projiziert und die Benutzereingaben erfasst. Entsprechend umfasst die Vorrichtung eine Projektionseinrichtung und mindestens eine Projektionsfläche, die mit optischen oder drucksensitiven Sensoren zur Erfassung von Benutzereingaben ausgestattet ist, die zu einer Einrichtung im Fahrzeug übertragen werden.

Aus der DE 10 2008 023 405 A1 ist ein Kraftfahrzeug und ein Display zur Darstellung veränderlicher Informationen und einem räumlich getrennt von dem Display angeordneten Bedienfeld mit zumindest zwei Bedienelementen zur Bedienung zumindest je einer Funktion des Kraftfahrzeugs bekannt. In diesem Fall umfasst das Kraftfahrzeug eine Anzeigesteuerung zur Anzeige eines in Abhängigkeit von der Ausrichtung einer Hand eines Bedieners zu dem Bedienfeld ausgerichteten Abbildes des Bedienfeldes in einem mittels des Displays abgebildeten Displaybereich.

Aus der DE 10 2006 043 208 A1 ist ein Touchscreen bekannt, der eine sensitive Bedienfläche zum Einstellen bestimmter Funktionen aufweist. Um die Bedienung zu vereinfachen, ist wenigstens ein mechanisches Stellelement über der sensitiven Bedienfläche angeordnet, das einen Auslöser aufweist, der bei einem Bewegen des Stellelements auf die sensitive Bedienfläche zur Funktionseinstellung einwirkt.

Aus der DE 10 2010 012240 A1 ist der Oberbegriff der Ansprüche 1 und 12 bekannt.

Es ist die Aufgabe der vorliegenden Erfindung, ein Bedienverfahren und ein Bediensystem der eingangs genannten Art bereitzustellen, die eine einfache, schnelle und intuitive Bedienung und Informationsaufnahme in einem Fahrzeug ermöglicht.

Diese Aufgabe wird durch ein Verfahren nach Anspruch 1 und eine Vorrichtung nach Anspruch 12 gelöst. Vorteilhafte Ausgestaltungen und Weiterbildungen sind Gegenstände der abhängigen Ansprüche.

Bei dem erfindungsgemäßen Verfahren werden in einem ersten Bereich einer Anzeigefläche im Innenraum des Fahrzeugs erste Graphikdaten angezeigt. In einem zweiten Bereich der Anzeigefläche werden zweite Graphikdaten angezeigt, wobei die ersten Graphikdaten den zweiten Graphikdaten zugeordnet sind. Es wird eine Position eines Betätigungselements in einem Erfassungsraum erfasst, der dem zweiten Bereich der Anzeigefläche zugeordnet ist. Die Position des Betätigungselements wird einem ersten Teil der zweiten Graphikdaten zugeordnet, wobei der erste Teil der zweiten Graphikdaten vorausgewählt wird. In Abhängigkeit von dem vorausgewählten ersten Teil der zweiten Graphikdaten werden in dem ersten Bereich der Anzeigefläche erste Graphikdaten für eine Vorschau in einem Anzeigemodus erzeugt.

Dabei wird im Sinne der Erfindung unter einer Vorauswahl des Teils der zweiten Graphikdaten verstanden, dass der Teil der zweiten Graphikdaten vorläufig ausgewählt wird. Dies bedeutet insbesondere, dass noch keine endgültige Auswahl zur Bedienung seitens des Nutzers getroffen wurde. Dem Nutzer werden dadurch die Graphikdaten, welche den zweiten Graphikdaten zugeordnet sind, angezeigt. Der Nutzer kann einfach, schnell und intuitiv entscheiden, ob er den Teil der zweiten Graphikdaten tatsächlich auswählen möchte. Vorteilhafterweise bleibt dem Nutzer dadurch erspart, eventuell wieder zurücknavigieren zu müssen, da ihm bereits, bevor er Graphikdaten tatsächlich auswählt, angezeigt wird, welche weiteren Informationen sich hinter diesen verbergen.

Insbesondere betrifft die Vorauswahl eine Vorauswahl eines Datensatzes innerhalb einer Menge von Datensätzen, welche durch die zweiten Graphikdaten im zweiten Bereich der Anzeigefläche visualisiert werden. Dabei sind den Datensätzen jeweils Informationen zugeordnet. Die dem vorausgewählten Datensatz zugeordneten Informationen werden in dem ersten Bereich der Anzeigefläche als Vorschau visualisiert. Dadurch kann der Nutzer durch ein Menge von Daten navigieren, ohne bereits eine tatsächliche Auswahl von Daten treffen zu müssen. Durch das erfindungsgemäße Verfahren ist es möglich, dass sich der Nutzer auf einfache Weise in der Datenmenge orientiert.

In einer Ausgestaltung wird der erste Teil der zweiten Graphikdaten an einer bestimmten Position in dem zweiten Bereich der Anzeigefläche angezeigt. Es wird eine Bedienaktion erfasst, mit welcher ein zweiter Teil der zweiten Graphikdaten auf die bestimmte Position gebracht wird, wobei nach der Bedienaktion der zweite Teil der zweiten Graphikdaten vorausgewählt wird. Die Bedienaktion kann dabei beispielsweise eine Wischgeste sein, mit der ein Bildlauf erzeugt wird. Es können dann Teile der zweiten Graphikdaten auf die bestimmte Position geschoben und somit vorausgewählt werden, während der erste Teil der zweiten Graphikdaten nicht mehr vorausgewählt wird. Die bestimmte Position ist bevorzugt ortsfest. Der Nutzer kann dann Graphikdaten vorauswählen, ohne auf den zweiten Bereich der Anzeigefläche während der Bedienaktion blicken zu müssen.

Die bestimmte Position wird insbesondere markiert dargestellt. Dadurch wird dem Nutzer dann visualisiert, auf welche Position ein zweiter Teil der zweiten Graphikdaten geschoben werden muss, um anstelle des bereits vorausgewählten ersten Teils der zweiten Graphikdaten vorausgewählt zu werden.

Bevorzugt umfassen die zweiten Graphikdaten Listeneinträge einer Liste, wobei der erste Teil der zweiten Graphikdaten einen ersten Listeneintrag umfasst und/oder der zweite Teil der Graphikdaten einen zweiten Listeneintrag umfasst. Dabei wird zunächst der erste Listeneintrag vorausgewählt und dem vorausgewählten Listeneintrag zugeordnete Informationen werden als Vorschau visualisiert. Durch die Bedienaktion, also beispielsweise die Wischgeste, wird ein Bildlauf durch die Listeneinträge erzeugt. Dadurch wird der erste Listeneintrag von der bestimmten Position entfernt und ein zweiter Listeneintrag auf der bestimmten Position angezeigt, der dann vorausgewählt wird. Die Listeneinträge können dabei insbesondere Kontakte in einem Telefonbuch sein. Wird dabei die Position des Betätigungselements einem Kontakt zugeordnet, werden in dem ersten Bereich der Anzeigefläche Informationen zu dem Kontakt angezeigt, beispielsweise ein Foto, eine Telefonnummer, eine Emailadresse und/oder eine Postadresse des Kontakts. Weiterhin kann die Liste auch in einem Mediasystem abgespeichert sein und Audio- oder Videodateien auflisten.

Weiterhin können die zweiten Graphikdaten Schaltflächen für Eingaben umfassen. Eingaben können dann über die Position des Betätigungselements erfasst werden. Die ersten Graphikdaten werden dann korrespondierend zu den Eingaben erzeugt. Die Eingaben können insbesondere über eine Berührung der Schaltflächen auf der Anzeigefläche im zweiten Bereich erfasst werden. Die Positionen des Betätigungselements können dann dort erfasst, wo der Nutzer die Anzeigefläche berührt. Alternativ kann auch die Position des Betätigungselements vor dem zweiten Bereich der Anzeigefläche erfasst werden, ohne dass diese berührt wird.

Unter einer *Schaltfläche* wird im Sinne der Erfindung ein Steuerelement einer graphischen Benutzerschnittstelle verstanden. Eine Schaltfläche unterscheidet sich von Elementen und Flächen zur reinen Informationsanzeige, so genannten Anzeigeelementen bzw. Anzeigenflächen, darin, dass sie auswählbar sind. Bei einer Auswahl einer Schaltfläche wird eine ihr zugeordnete Funktion ausgeführt. Die Funktion kann nur zu einer Veränderung der Informationsanzeige führen. Ferner können über die Schaltflächen Einrichtungen gesteuert werden, deren Bedienung von der Informationsanzeige unterstützt wird. Die Schaltflächen können somit herkömmliche mechanische Schalter ersetzen. Die Schaltflächen können beliebig für eine frei programmierbare Anzeigefläche erzeugt und von dieser angezeigt werden. Des Weiteren kann vorgesehen sein, dass eine Schaltfläche markiert werden kann. In diesem Fall wird die zugeordnete Funktion noch nicht ausgeführt. Die markierte Schaltfläche wird jedoch gegenüber anderen Schaltflächen hervorgehoben dargestellt. Erst bei einer Auswahl der Schaltfläche wird die ihr zugeordnete Funktion ausgeführt.

In einer Ausgestaltung des erfindungsgemäßen Verfahrens wird in dem ersten Bereich der Anzeigefläche eine geographische Karte mit einem Maßstab angezeigt. In dem zweiten Bereich der Anzeigefläche werden Schaltflächen für eine Eingabe eines Navigationssystems angezeigt. Über die Schaltflächen werden Einzeleingabeschritte eingegeben, wobei sich mit jedem Einzeleingabeschritt die Treffermenge innerhalb einer Menge von Datensätzen verändert. Nach jedem Einzeleingabeschritt werden Objekte des Navigationssystems ermittelt, die sich aus den bisherigen Einzeleingabeschritten des Eingabevorgangs ergeben. Der Maßstab der geographischen Karte wird derart verändert, dass alle ermittelten Objekte auf der geographischen Karte angezeigt werden. Dies erlaubt dem Nutzer bei einem Eingabevorgang einen Überblick über die Lage der ermittelten Objekte in der geographischen Karte. Die Objekte sind dabei beispielsweise Städte, Straßen, bestimmte Adressen oder Points-of-Interest.

In einer weiteren Ausgestaltung wird in dem zweiten Bereich der Anzeigefläche ein erstes Fenster mit Schaltflächen für Eingaben vollständig angezeigt. Es wird zumindest ein zweites Fenster angeschnitten angezeigt, in dem graphische Objekte enthalten sind, die den Eingaben zugeordnet sind. Weiterhin wird die Position des Betätigungselements einem der Fenster zugeordnet. Wenn die Position dem zweiten Fenster zugeordnet wird, wird das angeschnitten angezeigte Fenster zur vollständigen Anzeige gebracht und das erste Fenster wird zu einer angeschnittenen Anzeige gebracht. Dadurch kann dem Nutzer insbesondere eine Einbettung einer Anzeige in einen Bedienpfad angezeigt werden. Unter einer angeschnittenen Anzeige wird dabei verstanden, dass nur ein Ausschnitt des zweiten Fensters dargestellt wird. Weiterhin kann der Nutzer über einfaches Verändern der Position des Betätigungselementes verschiedene hierarchische Ebenen eines Bedienmenüs zur Anzeige bringen und schnell überblicken. Die in dem ersten Fenster angezeigten Schaltflächen können jedoch weiterhin bedient werden. Des Weiteren ist es möglich, dass von der zweiten Anzeigefläche mehrere angeschnittene Fenster dargestellt werden. In diesem Fall können insbesondere die Schaltflächen in einem angeschnitten angezeigten Fenster bedient werden.

In einer weiteren Ausgestaltung wird nach der Vorschau durch die ersten Graphikdaten der erste Teil der zweiten Graphikdaten ausgewählt, wobei die ersten Graphikdaten von dem Anzeigemodus in einen Bedienmodus wechseln. Die ersten Graphikdaten lassen sich demnach erst dann bedienen, wenn der erste Teil der zweiten Graphikdaten, also ein Listeneintrag oder ein graphisches Objekt der zweiten Graphikdaten, tatsächlich ausgewählt wurde. Vor dem Auswählen wird dem Nutzer durch die ersten Graphikdaten lediglich eine Vorschau auf den Inhalt der Informationen, die den zweiten Graphikdaten zugeordnet sind, gewährt, ohne dass er Zugriff auf diese erhält. Weiterhin können die ersten Graphikdaten dadurch in einen Bedienmodus wechseln, indem sie zumindest teilweise von Anzeigeobjekten in Schaltflächen umgewandelt werden.

Insbesondere wird erfasst, wenn das Betätigungselement den Erfassungsraum, der dem zweiten Bereich der Anzeigefläche zugeordnet ist, verlässt. Es wird dann die Schaltfläche im zweiten Bereich der Anzeigefläche ausgewählt, die zuletzt vorausgewählt war, bevor das Betätigungselement den Erfassungsraum verlassen hat. Vorteilhafterweise muss der Nutzer dann keine gesonderte Bedienaktion mehr tätigen, um den gewünschten Teil der zweiten Graphikdaten tatsächlich auszuwählen.

In einer anderen Ausgestaltung ist der zweite Bereich in zumindest zwei Teilbereiche aufgeteilt. Dabei werden in einem ersten Teilbereich Schaltflächen mit Menüpunkten angezeigt. Weiterhin wird eine Position des Betätigungselements einer der Schaltflächen in dem ersten Teilbereich zugeordnet. Dabei wird die Schaltfläche vorausgewählt. In einem zweiten Teilbereich des zweiten Bereichs werden die zweiten Graphikdaten in Abhängigkeit von der vorausgewählten Schaltfläche erzeugt. Dies ermöglicht eine übersichtliche und einfache Navigation durch ein Bedienmenü.

Weiterhin können dann in dem ersten Bereich der Anzeigefläche die gleichen Graphikdaten erzeugt werden wie in dem zweiten Teilbereich des zweiten Bereichs der Anzeigefläche. Die Graphikdaten in dem ersten Bereich können aber auch zusätzliche Informationen enthalten.

Insbesondere wird der erste Teilbereich des zweiten Bereichs abgesetzt von dem zweiten Teilbereich des zweiten Bereichs dargestellt. Dadurch wird dem Nutzer verdeutlicht, dass sich die Anzeige im ersten Teilbereich nicht verändert. Dies trägt insbesondere zu einer übersichtlichen Gestaltung der Anzeigefläche bei. Der erste Teilbereich kann beispielsweise durch eine Trennlinie oder eine andere Anordnung der Schaltflächen, beispielsweise nebeneinander statt untereinander, abgesetzt dargestellt werden.

Ferner betrifft die Erfindung ein Bediensystem in einem Fahrzeug. Das Bediensystem umfasst ein Anzeigefläche im Innenraum des Fahrzeugs, die in zumindest zwei Bereiche unterteilt ist. Dabei sind in einem ersten Bereich der Anzeigefläche erste Graphikdaten anzeigbar und in einem zweiten Bereich der Anzeigefläche sind zweite Graphikdaten anzeigbar, wobei die ersten Graphikdaten den zweiten Graphikdaten zugeordnet sind. Weiterhin umfasst das Bediensystem eine Erfassungseinheit, mittels welcher eine Position eines Betätigungselements in einem Erfassungsraum, welcher dem zweiten Bereich der Anzeigefläche zugeordnet ist, erfassbar ist.

Zudem umfasst das Bediensystem eine Steuereinheit, mittels welcher die Position des Betätigungselements einem ersten Teil der zweiten Graphikdaten zuordenbar ist. Dabei ist der erste Teil der zweiten Graphikdaten vorauswählbar. Weiterhin ist mittels der Steuereinheit der erste Bereich der Anzeigefläche derart ansteuerbar, dass erste Graphikdaten für eine Vorschau in Abhängigkeit von dem vorausgewählten ersten Teil der zweiten Graphikdaten in dem ersten Bereich der Anzeigefläche erzeugbar sind. Das Bediensystem ist insbesondere zum Ausführen des erfindungsgemäßen Bedienverfahrens geeignet und weist daher alle Vorteile des Bedienverfahrens auf.

Insbesondere ist der erste Bereich der Anzeigefläche im Innenraum des Fahrzeugs im Blickfeld eines Nutzers angeordnet, die auf dem Fahrer- oder Beifahrersitz des Fahrzeugs sitzt. Der zweite Bereich der Anzeigefläche ist in Handreichweite der Nutzers angeordnet. Das Bediensystem ermöglicht dann eine Bedienung, die hauptsächlich über den zweiten Bereich der Anzeigefläche getätigt wird. Das Betätigungselement ist dann insbesondere die Hand oder eine Fingerspitze des Nutzers.

Weiterhin umfasst zumindest der zweite Bereich der Anzeigefläche eine berührungsempfindliche Oberfläche. Dies ermöglicht dann Eingaben auf dem zweiten Bereich der Anzeigefläche. Die Anzeigefläche ist dadurch zumindest teilweise als Touchscreen ausgebildet.

Die Anzeigefläche kann auch durch zwei getrennte Anzeigen gebildet werden.

Ferner betrifft die Erfindung ein Fahrzeug, das ein erfindungsgemäßes Bediensystem umfasst.

Im Folgenden wird die Erfindung anhand von Ausführungsbeispielen mit Bezug zu den Zeichnungen erläutert.
- Figur 1: zeigt ein Ausführungsbeispiel des erfindungsgemäßen Bediensystems und
- Figuren 2a bis 6b: zeigen Anzeigen, wie sie von dem erfindungsgemäßen Bedienverfahren in dem ersten und dem zweiten Bereich der Anzeigefläche erzeugt werden.

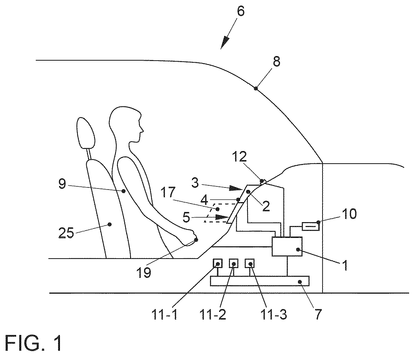

Zunächst wird der prinzipielle Aufbau des erfindungsgemäßen Bediensystems mit Bezug zu Figur 1 erläutert:
Das Bediensystem umfasst eine zentrale Steuereinheit 1. Diese ist mit einer Anzeigevorrichtung 2 gekoppelt, welche eine Anzeigefläche 4 aufweist. Die Steuereinheit 1 erzeugt erste Graphikdaten, die in einem ersten Bereich 3 auf der Anzeigefläche 4 angezeigt werden können. Die Anzeigefläche 4 kann von einem Display, insbesondere einem Flüssigkristalldisplay oder einem Plasmadisplay, beliebiger Bauart bereitgestellt werden. Ferner kann die Anzeigefläche 4 von einem Display mit organischen Leuchtdioden bereitgestellt werden. Die Anzeigefläche 4 kann dabei entweder eben oder gewölbt ausgeführt sein.

Der erste Bereich 3 der Anzeigefläche 4 liegt insbesondere im Sichtbereich eines Nutzers 9 auf dem Fahrersitz 25 des Fahrzeugs 6.

Des Weiteren weist die Anzeigefläche 4 einen zweiten Bereich 5 auf. Die Steuereinheit 1 erzeugt für den zweiten Bereich 5 der Anzeigefläche 4 zweite Graphikdaten zur Informationsdarstellung. Der zweite Bereich 5 umfasst eine berührungsempfindliche Oberfläche auf der Anzeigefläche 4, so dass ein so genannter Touchscreen bereitgestellt wird, insbesondere ein kapazitiver oder ein resistiver Touchscreen. In dem zweiten Bereich 5 der Anzeigefläche 4 werden insbesondere Schaltflächen gezeigt, welche der Bedienung dienen.

Der zweite Bereich 5 der Anzeigefläche 4 mit der berührungsempfindlichen Oberfläche ist in Reichweite des Nutzers 9 angeordnet. Die Reichweite umfasst den Bereich, den der auf dem Fahrersitz 25 sitzende Nutzer 9, welcher eine durchschnittlichen Größe aufweist, ohne weiteres, d. h. ohne oder nur mit einer geringen Veränderung seiner Position, in einer Stellung, die er normalerweise beim Fahren einnimmt, greifen kann. Um die berührungsempfindliche Oberfläche des zweiten Bereichs 5 der Anzeigefläche 4 zu berühren, muss sich der Nutzer 9 somit insbesondere überhaupt nicht oder nur geringfügig vorbeugen.

Des Weiteren ist bei der Anzeigefläche 4 eine Erfassungseinheit 12 vorgesehen, mittels welcher die Position eines Betätigungselements 19, beispielsweise die Hand oder Fingerspitze des Nutzers, in einem Erfassungsraum 17, der dem zweiten Bereich 3 der Anzeigefläche 4 zugeordnet ist, erfasst wird. Auch die Erfassungseinrichtung 12 ist mit der Steuereinheit 1 verbunden. Die Steuereinheit 1 kann die Graphikdaten für die Anzeigen in dem ersten Bereich 3 der Anzeigefläche 4 und dem zweiten Bereich 5 der Anzeigefläche 4 in Abhängigkeit von der erfassten Position des Betätigungselements 19 vor dem zweiten Bereich 5 der Anzeigefläche 4 erzeugen.

Der Erfassungsraum 17 kann dabei vor dem zweiten Bereich 5 der Anzeigefläche 4 ausgebildet sein. Der Erfassungsraum 17 kann aber auch von einer berührungsempfindlichen Oberfläche bereitgestellt werden, die auf der Anzeigefläche 4 im zweiten Bereich 5 angeordnet ist.

Die Steuereinheit 1 ist ferner mit einem Datenbus 7 des Fahrzeugs 6 gekoppelt. Die Einrichtungen 11-1, 11-2, 11-3 des Fahrzeugs 6, welche mittels der Anzeigevorrichtung 2 bedient werden sollen, sind auch mit diesem Datenbus 7 gekoppelt. Beispielsweise kann ein Navigationssystem 11-1, ein Multimediasystem 11-2 und eine Telekommunikationseinrichtung 11-3 vorgesehen sein. Ferner ist es auch möglich, dass einige Fahrzeugeinrichtungen 11-1, 11-2, 11-3 direkt mit der Steuereinheit 1 gekoppelt sind. Von den Fahrzeugeinrichtungen 11-1, 11-2 und 11-3 werden Daten gegebenenfalls über den Datenbus 7 an die Steuereinheit 1 übertragen. Dort werden die Daten verarbeitet. Es werden ferner Graphikdaten erzeugt, die in dem ersten Bereich 3 und dem zweiten Bereich 5 der Anzeigefläche 4 der Anzeigevorrichtung 2 graphisch wiedergegeben werden. Dabei werden auf der Anzeigefläche 4 Informationen angezeigt, die in direkter Verbindung mit der Bedienung über die berührungsempfindliche Oberfläche des zweiten Bereichs 5 der Anzeigefläche 4 oder über weitere Bedienelemente stehen. In dem ersten Bereich 3 der Anzeigefläche 4 werden unter anderem Informationen angezeigt, welche die Betätigungen visualisieren.

Schließlich ist die Steuereinheit 1 mit einem Speicher 10 verbunden, aus welchem Daten ausgelesen werden können. Auf dem Speicher 10 können vielfältige Daten, die für die Verarbeitung der von der Steuereinheit 1 empfangenen Daten erforderlich sind, gespeichert sein.

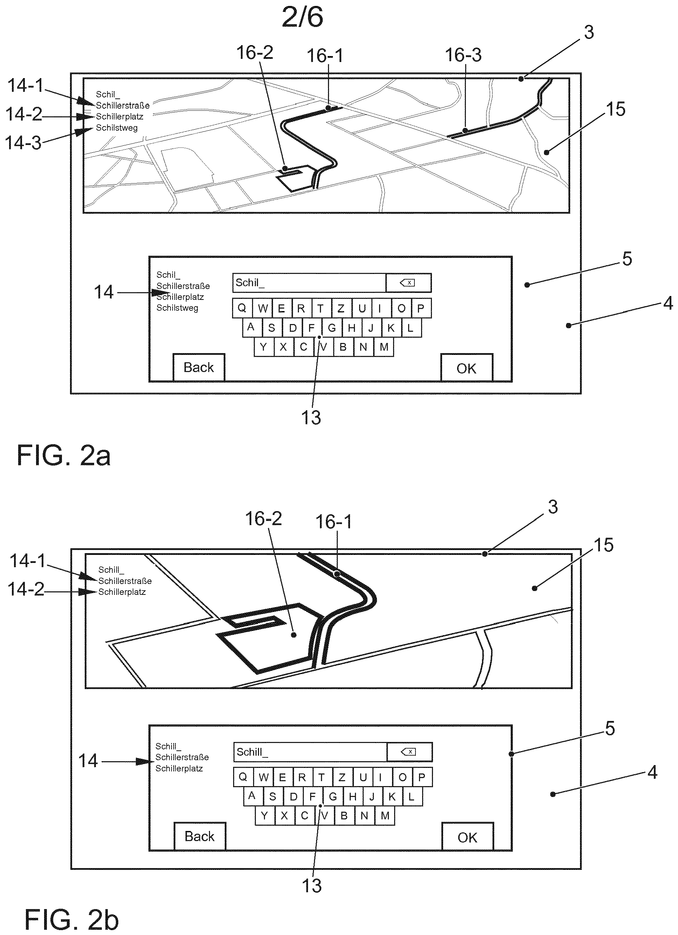

Im Folgenden wird das erfindungsgemäße Bedienverfahren mit Bezug zu den Figuren 2 bis 5 erläutert. Das Bedienverfahren kann von dem vorstehend beschriebenen Bediensystem ausgeführt werden.

In den Figuren 2a und 2b ist ein Beispiel für Anzeigen in dem ersten Bereich 3 und dem zweiten Bereich 5 der Anzeigeflächen 4 gezeigt, bei dem das Navigationssystem 11-1 bedient wird. In dem ersten Bereich 3 der Anzeigefläche 4 wird eine geographische Karte 15 angezeigt. In dem zweiten Bereich 5 der Anzeigefläche 4 sind Schaltflächen 13 dargestellt, über welche Eingaben getätigt werden können. Die Schaltflächen 13 repräsentieren dabei einzelne Buchstaben einer Tastatur. Über die Tastatur können daher Straßennamen oder Städtename eingegeben werden.

Tätigt der Nutzer Eingaben über die Schaltflächen 13, wird bei jeder Eingabe die Position eines Betätigungselements 19, beispielsweise der Fingerspitze des Nutzers 9, der Eingabe einer Schaltfläche 13 zugeordnet. Dadurch wird dann die betätigte Schaltfläche 13 ermittelt und somit die Buchstabenkette um jeweils den der betätigten Schaltfläche 13 zugeordneten Buchstaben erweitert.

In Figur 2a hat der Nutzer bereits die Buchstabenkette "Schil" über die Schaltflächen 13 eingegeben. Es wird innerhalb einer Liste 14 nach Listeneinträgen 14-1 bis 14-3 gesucht, welche die Buchstabenkette "Schil" beinhalten. Im vorliegenden Beispiel werden die Listeneinträge 14-1 bis 14-3, welche mit der Buchstabenkette "Schil" beginnen, ermittelt. Es werden dazu die Listeneinträge 14-1 bis 14-3 "Schillerstraße", "Schillerplatz" und "Schilstweg" ermittelt. Die Liste 14 mit den Listeneinträgen 14-1 bis14-3 wird sowohl in dem ersten Bereich 3 wie auch in dem zweiten Bereich 5 der Anzeigefläche 4 angezeigt.

Gleichzeitig wird in dem ersten Bereich 3 der Anzeigefläche 4 der Maßstab der geographischen Karte 15 derart eingestellt, dass alle drei Objekte 16-1 bis 16-3, welche zu den Listeneinträgen 14-1 bis 14-3 korrespondieren, auf der geographischen Karte 15 angezeigt werden. Die Objekte 16-1 bis 16-3 werden dann hervorgehoben dargestellt. Dabei können die Objekte 16-1 bis 16-3, die auf der geographischen Karte 15 zu den Listeneinträgen 14-1 bis 14-3 korrespondieren, dadurch hervorgehoben dargestellt werden, dass sie entweder farblich markiert werden oder in einer anderen Dicke als andere Objekte dargestellt werden.

Gibt der Nutzer einen weiteren Buchstaben ein, so dass die Buchstabenkette nun "Schill" lautet und nur mehr die Listeneinträge 14-1 und 14-2 vorausgewählt werden, wird der Maßstab der geographischen Karte 15 wiederum derart verändert, dass nur mehr die zu den Listeneinträgen 14-1 und 14-2 korrespondierenden Objekte 16-1 und 16-2 auf der geographischen Karte 15 angezeigt werden. Die Objekte 16-1 und 16-2 werden im Vergleich zu anderen aufgrund des eingestellten Maßstabs noch dargestellten Objekten hervorgehoben dargestellt.

Durch dieses Verfahren wird dem Nutzer 9 eine Vorschau darauf gegeben, wo sich die von ihm eingegebenen Straßennamen innerhalb des Stadtgebietes einordnen lassen. Dadurch erhält der Nutzer 9 bereits frühzeitig einen Überblick, bevor er eine tatsächliche Auswahl getroffen hat. Eventuelle Fehler können daher frühzeitig korrigiert werden.

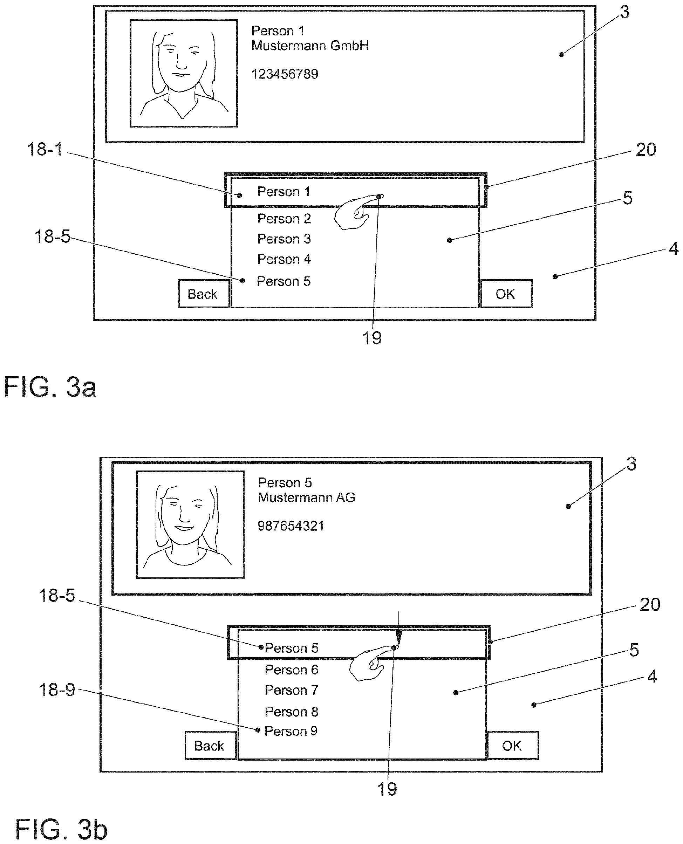

In den Figuren 3a und 3b ist ein weiteres Beispiel für Anzeigen in dem ersten 3 und dem zweiten Bereich 5 der Anzeigefläche 4 gezeigt, bei dem das Telekommunikationssystem 11-3 des Fahrzeugs 6 bedient wird. In dem ersten Bereich 3 der Anzeigefläche 4 werden Details zu einem Kontakt angezeigt, in dem zweiten Bereich 5 der Anzeigefläche 4 wird eine Liste mit Listeneinträgen 18-1 bis 18-5 angezeigt, welche als Schaltflächen ausgebildet sind. Die Listeneinträge 18-1 bis 18-5 sind Kontakten des Telekommunikationssystems 11-3 zugeordnet. Bringt der Nutzer 9 seine Fingerspitze 19 über einen bestimmten Listeneintrag 18-1, wird dieser Kontakt vorausgewählt. Dies bedeutet, dass in dem ersten Bereich 3 der Anzeigefläche 4 Informationen angezeigt werden, die dem Listeneintrag 18-1 zugeordnet sind. Auf diese Informationen kann jedoch nicht zugegriffen werden, da der Kontakt noch nicht tatsächlich ausgewählt wurde.

Weiterhin wird die Position des Listeneintrags 18-1 durch eine Markierung 20 markiert dargestellt. Der Kontakt, welcher dem Listeneintrag 18-1 zugeordnet ist, ist der erste Eintrag der Liste. Er wird daher an oberster Stelle in dem zweiten Bereich 5 der Anzeigefläche 4 angezeigt.

Bewegt der Nutzer 9 nun seine Fingerspitze 19 nach unten, wie es in Figur 3b gezeigt ist, wird eine Bedienaktion erfasst, mit welcher der Nutzer einen Bildlauf erzeugt. Die Bedienaktion wird also als Wischgeste erkannt, mit welcher der Nutzer die folgenden Kontakte in der Liste, dargestellt durch die Schaltflächen 18-2 bis 18-9 nach und nach auf die oberste Position, die durch die Markierung 20 markiert ist, schieben kann. Jeder Kontakt, der auf die oberste Position geschoben wird, wird dann vorausgewählt. Es wird also die Position, auf welcher sich der zuerst vorausgewählte Listeneintrag 18-1, vorausgewählt. Alle weiteren durch die Wischgeste auf diese gebrachten Listeneinträge 18-2 bis 18-9 werden dann vorausgewählt.

In Figur 3b befindet sich beispielsweise der Listeneintrag 18-5 "Person 5" auf der markierten Position. Daher wird der Listeneintrag 18-5 vorausgewählt. Es wird in dem ersten Bereich 3 der Anzeigefläche 4 eine Vorschau zu dem Listeneintrag 18-5 "Person 5" angezeigt. Verlässt der Nutzer 9 mit seiner Fingerspitze 19 den Erfassungsraum 17, so wird der Listeneintrag 18-5 ausgewählt, der zuletzt vorausgewählt war, bevor die Fingerspitze 19 den Erfassungsraum 17 verlassen hat. Die Informationen im ersten Bereich 3 der Anzeigefläche werden dann in bedienbare Schaltflächen umgewandelt. Bei einem Antippen der angezeigten Nummer im ersten Bereich 3 der Anzeigefläche wird dann der Kontakt angerufen.

Wird der Listeneintrag 18-3 als erstes ausgewählt, so wird die Position dieses Listeneintrags 18-3 markiert dargestellt. Werden dann weitere Listeneinträge 18-1, 18-2 oder 18-4 bis 18-9 auf die markierte Position des Listeneintrags 18-3 geschoben, so werden diese vorausgewählt. Die Position, auf welcher ein Listeneintrag 18-1 bis 18-9 vorausgewählt wird ist demnach nicht auf eine Randposition des zweiten Bereichs 5 der Anzeigefläche 4 beschränkt.

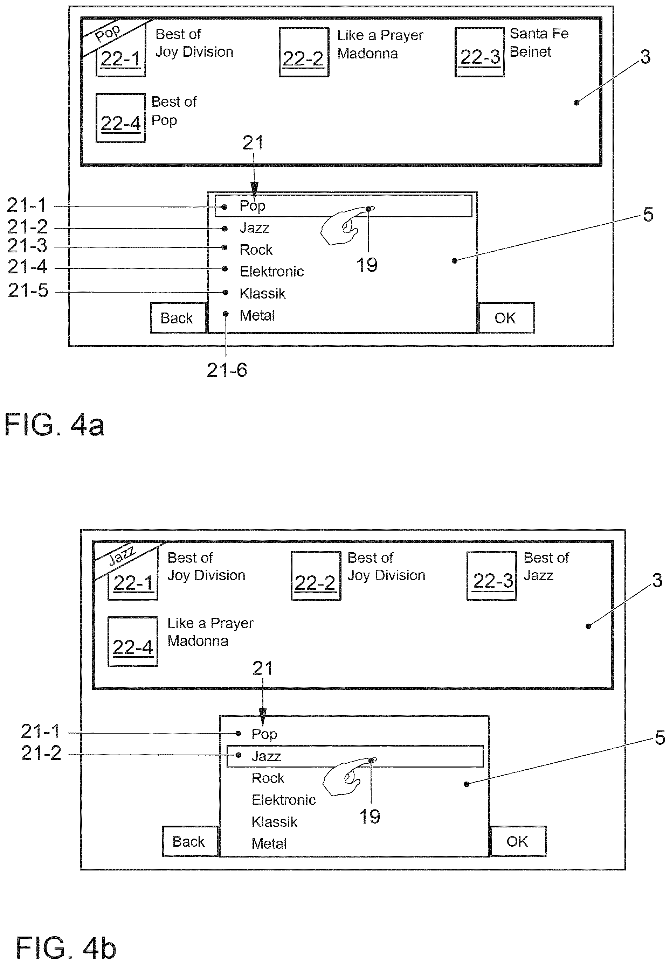

Mit Bezug zu den Figuren 4a und 4b wird ein weiteres Beispiel für Anzeigen in dem ersten 3 und zweiten Bereich 5 der Anzeigefläche 4 erläutert, welche von der Steuereinheit 1 erzeugt werden. Dabei wird das Multimediasystem 11-2 bedient.

Dabei wird eine Liste 21 von Musikrichtungen im zweiten Bereich 5 der Anzeigefläche 4 angezeigt. Wiederum wird die Position der Fingerspitze 19 des Nutzers 9 in dem Erfassungsraum 17 erfasst und einem der Listeneinträge 21-1 zugeordnet.

In dem ersten Bereich 3 der Anzeigefläche 4 werden dann graphische Objekte 22-1 bis 22-4 angezeigt, welche Musikalben repräsentieren, die der Musikrichtung zugeordnet sind, angezeigt. Wechselt die Position der Fingerspitze zu einem anderen Listeneintrag 21-2, werden die dem Listeneintrag 21-2 zugeordneten Musikalben angezeigt.

Ein Musikalbum in dem ersten Bereich 3 der Anzeigefläche 4 kann jedoch erst ausgewählt werden, wenn der Nutzer über eine Bedienaktion, beispielsweise durch eine Berührung eines der Listeneinträge 21-1 bis 21-6, getätigt hat. Dann werden die graphischen Objekte 22-1 bis 22-4 von Anzeigeobjekten in Schaltflächen umgewandelt. Dadurch kann verhindert werden, dass unbeabsichtigte Eingaben im ersten Bereich 3 der Anzeigefläche 4 zu einer Veränderung der Anzeige in dem ersten Bereich 3 führen.

Weiterhin kann der Listeneintrag 21-1 oder 21-2, dem die Position der Fingerspitze 19 zugeordnet wird, wiederum markiert angezeigt werden.

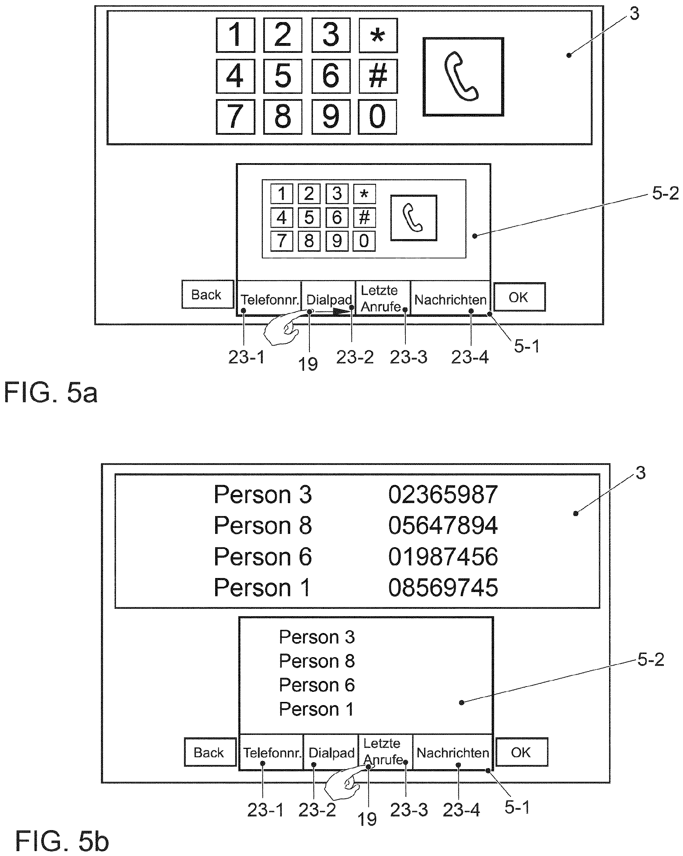

Ein weiteres Ausführungsbeispiel des erfindungsgemäßen Verfahrens wird mit Bezug zu den Figuren 5a und 5b erläutert. Dabei wird wiederum das Telekommunikationssystem 11-3 bedient.

Dazu wird der zweite Bereich 5 der Anzeigefläche 4 in einen ersten 5-1 und einen zweiten Teilbereich 5-2 aufgeteilt. Der erste Teilbereich 5-1 ist dabei insbesondere optisch von dem zweiten Teilbereich 5-2 abgesetzt, beispielsweise durch eine Trennlinie.

In dem ersten Teilbereich 5-1 werden Schaltflächen 23-1 bis 23-4 angezeigt. Jede der Schaltflächen 23-1 bis 23-4 ist dabei einem Menüpunkt der Telekommunikationsfunktion zugeordnet. Die Menüpunkte sind beispielsweise: Telefonbuch 23-1, Tastenfeld 23-2, letzte Anrufe 23-3 und Nachrichten 23-4.

Es wird wiederum die Position der Fingerspitze 19 des Nutzers 9 erfasst und einer der Schaltflächen 23-2 zugeordnet. In dem zweiten Unterbereich 5-2 werden dann Informationen, die dem Menüpunkt zugeordnet sind, angezeigt. Die Schaltfläche 23-2 ist dem Menüpunkt Tastenfeld zugeordnet. Es wird daher ein Tastenfeld in dem zweiten Teilbereich 5-2 angezeigt.

In dem ersten Bereich 3 der Anzeigefläche 4 wird das gleiche Tastenfeld vergrößert als Vorschau angezeigt.

Bewegt der Nutzer 9 seine Fingerspitze 19 weiter nach rechts, wird die Position seiner Fingerspitze 19 der Schaltfläche 23-3 "Letzte Anrufe" zugeordnet. Der zweite Teilbereich 5-2 wird dann automatisch so angesteuert, dass die Kontakte angezeigt werden, die zuletzt angerufen haben oder die der Nutzer 9 zuletzt angerufen hat. In dem ersten Bereich 3 der Anzeigefläche 4 werden die gleichen Kontakte angezeigt. Es werden jedoch noch zusätzliche Informationen, wie beispielsweise die Nummer des Kontakts, angezeigt.

Verlässt der Nutzer 9 mit seiner Hand de Erfassungsraum 17, so wird die Schaltfläche 23-3 ausgewählt, die zuletzt vorausgewählt war, bevor die Fingerspitze 19 den Erfassungsraum 17 verlassen hat. Eine gesonderte Eingabe zur Auswahl des Menüpunktes ist daher nicht notwendig.

Der erste Teilbereich 5-1 des zweiten Bereichs 5 der Anzeigefläche 4 ist insbesondere nur zum Vorauswählen oder Auswählen eines Menüpunktes über eine der Schaltflächen 23-1 bis 23-4 vorgesehen. Andere Eingaben können in dem ersten Teilbereich 5-1 nicht getätigt werden.

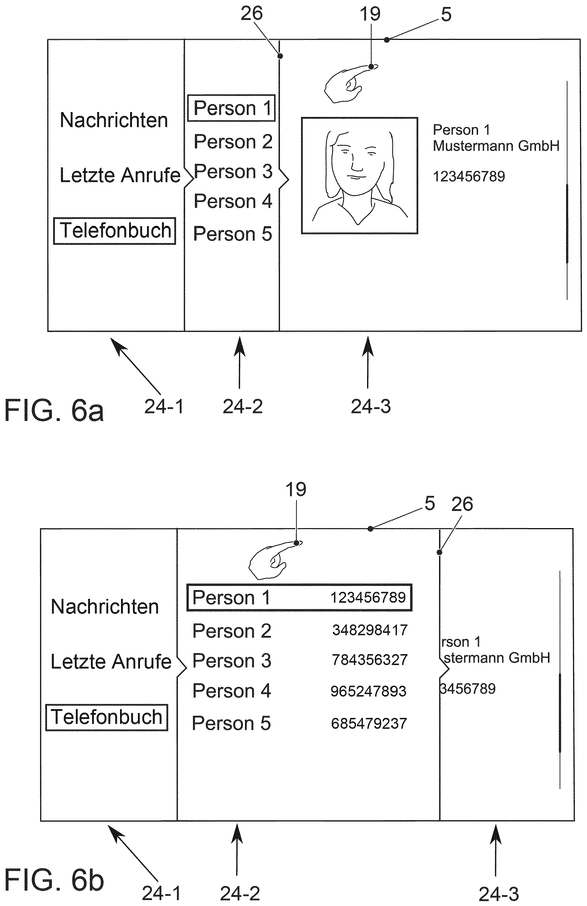

Mit Bezug zu den Figuren 6a und 6b wird ein weiteres Ausführungsbeispiel des erfindungsgemäßen Verfahrens erläutert. Dabei wird wiederum das Telekommunikationssystem 11-3 bedient.

In Figur 6a ist dazu eine Anzeige in dem zweiten Bereich 5 der Anzeigefläche 4 gezeigt. Es werden drei Fenster 24-1 bis 24-3 angezeigt. Die Anzeigefenster 24-1 und 24-2 werden dabei in einer angeschnittenen Anzeige angezeigt. Das Anzeigefenster 24-3 wird in einer vollständigen Anzeige angezeigt. Die Anzeigefenster 24-1 bis 24-3 stellen insbesondere einen Bedienpfad dar. Es ist die Funktion Telekommunikation ausgewählt. Die niedrigste Hierarchiestufe für das Telekommunikationssystem 11-3 ist dabei im Anzeigefenster 24-1 angezeigt. Es ist der Menüpunkt "Telefonbuch" ausgewählt. Dieser Menüpunkt wird hervorgehoben dargestellt. Das Anzeigefenster 24-2 zeigt alle im Telefonbuch eingetragenen Kontakte in einer Listenform, wobei die Listeneinträge Schaltflächen sind, über welche die Kontakte ausgewählt werden können. Im vorliegenden Beispiel ist der Kontakt "Person 1" ausgewählt.

Die Position der Fingerspitze 19 des Nutzers 9 wird vor dem Anzeigefenster 24-3 in dem Erfassungsraum 17 erfasst. Dieses wird daher dem Anzeigefenster 24-3 zugeordnet. Das Anzeigefenster 24-3 wird daher vollständig angezeigt. Dieses zeigt Details zum ausgewählten Kontakt "Person 1".

Bewegt der Nutzer 9 seine Fingerspitze 19 in Richtung des Anzeigefensters 24-2, beispielsweise weil er einen anderen Kontakt auswählen möchte, ändert sich die Position der Fingerspitze. Überschreitet die Position vor der Anzeigefläche 4 die Linie 26, wird die Fingerspitze 19 dem Anzeigefenster 24-2 zugeordnet. Dieses wird dann zur vollständigen Anzeige gebracht, während das Anzeigefenster 24-3 zu einer angeschnittenen Anzeige gebracht wird. In der vollständigen Anzeige des Anzeigefensters 24-2 sind zusätzlich zu den Namen der Kontakte noch die Telefonnummern der Kontakte angezeigt. Der Nutzer 9 kann nun über die Schaltflächen im Anzeigefenster 24-2 einen anderen Kontakt auswählen.

Die Position der Fingerspitze 19 kann auch über ein Antippen des gewünschten Anzeigefensters erfasst werden.

Es wird darauf hingewiesen, dass sich die Anzeige mit der Vorschau in dem ersten Bereich 3 der Anzeigefläche 4 im Wesentlichen simultan mit den Eingaben auf der berührungsempfindlichen Oberfläche des zweiten Bereichs 5 der Anzeigefläche 4 ändern. Der erste Bereich 3 der Anzeigefläche 4 bietet somit eine Live-Vorschau für die getätigten Eingaben.

Weiterhin wird darauf hingewiesen, dass das Bediensystem und das Bedienverfahren nicht nur in Verbindung mit dem Nutzer 9 auf dem Fahrersitz 25 des Fahrzeugs 6 eingesetzt werden kann, sondern auch von anderen Fahrzeuginsassen des Fahrzeugs 6, die auf anderen Sitzen des Fahrzeugs 6 sitzen.

### Bezugszeichenliste

- 1: Steuereinheit
- 2: Anzeigevorrichtung
- 3: erster Bereich der Anzeigefläche
- 4: Anzeigefläche
- 5: zweiter Bereich der Anzeigefläche
- 5-1: erster Teilbereich des zweiten Bereichs der Anzeigefläche
- 5-2: zweiter Teilbereich des zweiten Bereichs der Anzeigefläche
- 6: Fahrzeug
- 7: Datenbus
- 8: Windschutzscheibe
- 9: Nutzer
- 10: Speicher
- 11-1: Navigationssystem
- 11-2: Multimediasystem
- 11-3: Telekommunikationssystem
- 12: Fahrersitz
- 13: Schaltflächen
- 14: Liste
- 14-1 bis 14-3: Listeneinträge
- 15: geographische Karte
- 16-1 bis 16-3: Objekte
- 17: Erfassungsraum
- 18-1 bis 18-9: Listeneinträge; Schaltflächen
- 19: Betätigungselement; Fingerspitze
- 20: Markierung
- 21-1 bis 21-5: Schaltflächen
- 22-1 bis 22-5: graphische Objekte
- 23-1 bis 23-4: Schaltflächen
- 24-1 bis 24-3: Fenster
- 25: Fahrersitz
- 26: Linie

## Patentansprüche

1. Bedienverfahren in einem Fahrzeug (6), bei dem
in einem ersten Bereich (3) einer Anzeigefläche (4) im Innenraum des Fahrzeugs (6) erste Graphikdaten angezeigt werden,
in einem zweiten Bereich (5) der Anzeigefläche (4) zweite Graphikdaten angezeigt werden, wobei die ersten Graphikdaten den zweiten Graphikdaten zugeordnet sind,
eine Position eines Betätigungselements (19) in einem Erfassungsraum (17) erfasst wird, der dem zweiten Bereich (5) der Anzeigefläche (4) zugeordnet ist, und
die Position des Betätigungselements (19) einem ersten Teil der zweiten Graphikdaten zugeordnet wird, wobei der erste Teil der zweiten Graphikdaten vorausgewählt wird,
**dadurch gekennzeichnet, dass**
die Vorauswahl eine Auswahl eines Datensatzes innerhalb einer Menge von Datensätzen betrifft, welche durch die zweiten Graphikdaten im zweiten Bereich (5) der Anzeigefläche (4) visualisiert werden,
dem vorausgewählten Datensatz Informationen zugeordnet sind und
in Abhängigkeit von dem vorausgewählten Datensatz in dem ersten Bereich (3) der Anzeigefläche (4) erste Graphikdaten für eine Vorschau in einem Anzeigemodus erzeugt werden, wobei die dem vorausgewählten Datensatz zugeordnete Informationen in dem ersten Bereich (3) der Anzeigefläche (4) als Vorschau visualisiert werden.

2. Bedienverfahren nach Anspruch 1,
**dadurch gekennzeichnet, dass**
der erste Teil der zweiten Graphikdaten (18-1) an einer bestimmten Position in dem zweiten Bereich (5) der Anzeigefläche (4) angezeigt wird, und
eine Bedienaktion erfasst wird, mit welcher ein zweiter Teil (18-5) der zweiten Graphikdaten auf die bestimmte Position gebracht wird, wobei nach der Bedienaktion der zweite Teil (18-5) der zweiten Graphikdaten vorausgewählt wird.

3. Bedienverfahren nach Anspruch 2,
**dadurch gekennzeichnet, dass**
die bestimmte Position markiert dargestellt wird.

4. Bedienverfahren nach einem der Ansprüche 1 bis 3,
**dadurch gekennzeichnet, dass**
die zweiten Graphikdaten Listeneinträge (14-1, 14-1, 14-3, 18-1 - 18-9) einer Liste (14) umfassen, wobei der erste Teil der zweiten Graphikdaten einen ersten Listeneintrag (14-1, 14-1, 14-3, 18-1) umfasst und/oder der zweite Teil der Graphikdaten einen zweiten Listeneintrag (18-5) umfasst.

5. Bedienverfahren nach einem der Ansprüche 1 bis 4,
**dadurch gekennzeichnet, dass**
die zweiten Graphikdaten Schaltflächen (13) für Eingaben umfassen,
Eingaben für die Schaltflächen (13) über die Position des Betätigungselements (19) erfasst werden und
die ersten Graphikdaten korrespondierend zu den Eingaben erzeugt werden.

6. Bedienverfahren nach Anspruch 5,
**dadurch gekennzeichnet, dass**
in dem ersten Bereich (3) der Anzeigefläche (4) eine geographische Karte (15) mit einem Maßstab angezeigt wird und in dem zweiten Bereich (5) der Anzeigefläche (4) Schaltflächen (13) für eine Eingabe eines Navigationssystems (11-1) angezeigt werden,
über die Schaltflächen (13) Einzeleingabeschritte eingegeben werden, wobei sich mit jedem Einzeleingabeschritt die Treffermenge innerhalb einer Menge von Datensätzen verändert,
nach jedem Einzeleingabeschritt Objekte (16-1, 16-2, 16-3) des Navigationssystems (11-1) ermittelt werden, die sich aus den bisherigen Einzeleingabeschritten des Eingabevorgangs ergeben, und
der Maßstab derart verändert wird, dass alle nach jedem Einzeleingabeschritt ermittelten Objekte (16-1, 16-2, 16-3) auf der geographischen Karte (15) angezeigt werden.

7. Bedienverfahren nach einem der vorhergehenden Ansprüche,
**dadurch gekennzeichnet, dass**
in dem zweiten Bereich (5) der Anzeigefläche (4) bei einem Eingabevorgang ein erstes Fenster (24-2) mit Schaltflächen für Eingaben vollständig angezeigt wird,
zumindest ein zweites Fenster (24-3) angeschnitten angezeigt wird, in dem graphische Objekte enthalten sind, die den Eingaben zugeordnet sind,
die Position des Betätigungselements (19) einem der Fenster (24-1, 24-2, 24-3) zugeordnet wird, und,
wenn die Position dem zweiten Fenster (24-3) zugeordnet wird, das angeschnitten angezeigte Fenster (24-3) zur vollständigen Anzeige und das erste Fenster (24-2) zu einer angeschnittenen Anzeige gebracht wird.

8. Bedienverfahren nach einem der vorhergehenden Ansprüche,
**dadurch gekennzeichnet, dass**
nach der Vorschau durch die ersten Graphikdaten der erste Teil der zweiten Graphikdaten ausgewählt wird, wobei die ersten Graphikdaten von dem Anzeigemodus in einen Bedienmodus wechseln.

9. Bedienverfahren nach einem der Ansprüche 5 bis 8,
**dadurch gekennzeichnet, dass**
erfasst wird, wenn das Betätigungselement (19) den Erfassungsraum (17), der dem zweiten Bereich (5) der Anzeigefläche (4) zugeordnet ist, verlässt, und
die Schaltfläche (23-3) im zweiten Bereich (5) der Anzeigefläche (4) ausgewählt wird, die zuletzt vorausgewählt war, bevor das Betätigungselement (19) den Erfassungsraum (17) verlassen hat.

10. Bedienverfahren nach einem der vorhergehenden Ansprüche,
**dadurch gekennzeichnet, dass**
der zweite Bereich (5) in zumindest zwei Teilbereiche (5-1, 5-2) aufgeteilt ist, wobei in einem ersten Teilbereich (5-1) Schaltflächen (23-1 - 23-4) mit Menüpunkten angezeigt werden,
eine Position des Betätigungselements (19) einer der Schaltflächen (23-1 - 23-4) in dem ersten Teilbereich (5-1) zugeordnet wird, wobei die Schaltfläche vorausgewählt wird, und
in einem zweiten Teilbereich (5-2) die zweiten Graphikdaten in Abhängigkeit von der vorausgewählten Schaltfläche (23-2, 23-3) erzeugt werden.

11. Bedienverfahren nach Anspruch 10,
**dadurch gekennzeichnet, dass**
der erste Teilbereich (5-1) des zweiten Bereichs (5) abgesetzt von dem zweiten Teilbereich (5-2) des zweiten Bereichs (5) dargestellt wird.

12. Bediensystem in einem Fahrzeug (6) mit
einer Anzeigefläche (4) im Innenraum des Fahrzeugs (6), die in zumindest zwei Bereiche (3, 5) unterteilt ist, wobei in einem ersten Bereich (3) der Anzeigefläche (4) erste Graphikdaten anzeigbar sind und in einem zweiten Bereich (5) der Anzeigefläche (4) zweite Graphikdaten anzeigbar sind, wobei die ersten Graphikdaten den zweiten Graphikdaten zugeordnet sind,
einer Erfassungseinheit (12), mittels welcher eine Position eines Betätigungselements (19) in einem Erfassungsraum (17), welcher dem zweiten Bereich (5) der Anzeigefläche (4) zugeordnet ist, erfassbar ist, und
einer Steuereinheit (1), mittels welcher die Position des Betätigungselements (19) einem ersten Teil der zweiten Graphikdaten zuordenbar ist, wobei der erste Teil der zweiten Graphikdaten vorauswählbar ist,
**dadurch gekennzeichnet, dass**
die Vorauswahl eine Auswahl eines Datensatzes innerhalb einer Menge von Datensätzen betrifft, welche durch die zweiten Graphikdaten im zweiten Bereich (5) der Anzeigefläche (4) visualisierbar sind,
dem vorausgewählten Datensatz Informationen zugeordnet sind und
mittels der Steuereinheit (1) der erste Bereich (3) der Anzeigefläche (4) derart ansteuerbar ist, dass erste Graphikdaten für eine Vorschau in Abhängigkeit von dem vorausgewählten Datensatz in dem ersten Bereich (3) der Anzeigefläche (4) erzeugbar sind, wobei die dem vorausgewählten Datensatz zugeordnete Informationen in dem ersten Bereich (3) der Anzeigefläche (4) als Vorschau visualisierbar sind.

13. Bediensystem nach Anspruch 12,
**dadurch gekennzeichnet, dass**
der erste Bereich (3) der Anzeigefläche (4) im Innenraum des Fahrzeugs (6) im Blickfeld eines Nutzers (9) angeordnet ist, der auf dem Fahrer- (25) oder Beifahrersitz des Fahrzeugs (6) sitzt, und der zweite Bereich (5) der Anzeigefläche (4) in Handreichweite des Nutzers (9) angeordnet ist.

14. Fahrzeug (6) mit einem Bediensystem nach einem der Ansprüche 12 oder 13.

## Claims

1. Operating method in a vehicle (6), in which
first graphical data are displayed in a first region (3) of a display surface (4) in the interior of the vehicle (6),
second graphical data are displayed in a second region (5) of the display surface (4), wherein the first graphical data are associated with the second graphical data,
a position of an actuation element (19) in a detection space (17) that is associated with the second region (5) of the display surface (4) is detected, and
the position of the actuation element (19) is associated with a first portion of the second graphical data, wherein the first portion of the second graphical data is preselected,
**characterized in that**
the preselection relates to a selection of a dataset within a set of datasets that are visualized by the second graphical data in the second region (5) of the display surface (4),
information is associated with the preselected dataset and first graphical data are generated for a preview in a display mode in the first region (3) of the display surface (4) depending on the preselected dataset, wherein the information associated with the preselected dataset is visualized as a preview in the first region (3) of the display surface (4).

2. Operating method according to Claim 1,
**characterized in that**
the first portion of the second graphical data (18-1) is displayed at a particular position in the second region (5) of the display surface (4), and
an operating action by way of which a second portion (18-5) of the second graphical data is brought into the particular position is detected, wherein the second portion (18-5) of the second graphical data is preselected following the operating action.

3. Operating method according to Claim 2,
**characterized in that**
the particular position is displayed in marked form.

4. Operating method according to one of Claims 1 to 3, **characterized in that**
the second graphical data comprise list entries (14-1, 14-1, 14-3, 18-1 - 18-9) from a list (14), wherein the first portion of the second graphical data comprises a first list entry (14-1, 14-1, 14-3, 18-1) and/or the second portion of the graphical data comprises a second list entry (18-5).

5. Operating method according to one of Claims 1 to 4, **characterized in that**
the second graphical data comprise buttons (13) for inputs,
inputs for the buttons (13) are detected through the position of the actuation element (19) and
the first graphical data are generated in a manner corresponding to the inputs.

6. Operating method according to Claim 5,
**characterized in that**
a geographical map (15) with a scale is displayed in the first region (3) of the display surface (4) and buttons (13) for an input into a navigation system (11-1) are displayed in the second region (5) of the display surface (4),
the buttons (13) are used to input individual input steps, wherein the number of hits within a set of datasets changes with each individual input step,
after each individual input step, objects (16-1, 16-2, 16-3) of the navigation system (11-1) that result from the previous individual input steps of the input procedure are determined, and
the scale is changed such that all of the objects (16-1, 16-2, 16-3) determined after each individual input step are displayed on the geographical map (15).

7. Operating method according to one of the preceding claims,
**characterized in that**
a first window (24-2) containing buttons for inputs is displayed completely in the second region (5) of the display surface (4) during an input procedure,
at least one second window (24-3) containing graphical objects that are associated with the inputs is displayed in truncated form,
the position of the actuation element (19) is associated with one of the windows (24-1, 24-2, 24-3), and,
when the position is associated with the second window (24-3), the window (24-3) displayed in truncated form is displayed completely and the first window (24-2) is displayed in truncated form.

8. Operating method according to one of the preceding claims,
**characterized in that,**
after the preview by way of the first graphical data, the first portion of the second graphical data is selected, wherein the first graphical data change from the display mode to an operating mode.

9. Operating method according to one of Claims 5 to 8, **characterized in that**
the time when the actuation element (19) leaves the detection space (17) that is associated with the second region (5) of the display surface (4) is detected, and
the buttons (23-3) in the second region (5) of the display surface (4) that were last preselected before the actuation element (19) left the detection space (17) are selected.

10. Operating method according to one of the preceding claims,
**characterized in that**
the second region (5) is divided into at least two subregions (5-1, 5-2), wherein buttons (23-1 - 23-4) having menu items are displayed in a first subregion (5-1),
a position of the actuation element (19) is associated with one of the buttons (23-1 - 23-4) in the first subregion (5-1), wherein the button is preselected, and
the second graphical data are generated in a second subregion (5-2) depending on the preselected button (23-2, 23-3).

11. Operating method according to Claim 10, **characterized in that**
the first subregion (5-1) of the second region (5) is displayed away from the second subregion (5-2) of the second region (5).

12. Operating system in a vehicle (6) having
a display surface (4) in the interior of the vehicle (6) that is divided into at least two regions (3, 5), wherein first graphical data are able to be displayed in a first region (3) of the display surface (4) and second graphical data are able to be displayed in a second region (5) of the display surface (4), wherein the first graphical data are associated with the second graphical data,
a detection unit (12) by way of which a position of an actuation element (19) in a detection space (17) that is associated with the second region (5) of the display surface (4) is able to be detected, and
a control unit (1) by way of which the position of the actuation element (19) is able to be associated with a first portion of the second graphical data, wherein the first portion of the second graphical data is able to be preselected,
**characterized in that**
the preselection relates to a selection of a dataset within a set of datasets that are able to be visualized by the second graphical data in the second region (5) of the display surface (4),
information is associated with the preselected dataset and the first region (3) of the display surface (4) is able to be actuated by way of the control unit (1) such that first graphical data are able to be generated for a preview in the first region (3) of the first display surface (4) depending on the preselected dataset, wherein the information associated with the preselected dataset is able to be visualized as a preview in the first region (3) of the display surface (4).

13. Operating system according to Claim 12, **characterized in that**
the first region (3) of the display surface (4) is arranged in the interior of the vehicle (6) in the field of view of a user (9) sitting on the driver's seat (25) or front passenger seat of the vehicle (6), and the second region (5) of the display surface (4) is arranged within arm's length of the user (9).

14. Vehicle (6) having an operating system according to either of Claims 12 and 13.

## Revendications

1. Procédé de commande dans un véhicule (6), dans lequel
des premières données graphiques sont affichées dans une première zone (3) d'une surface d'affichage (4) dans l'habitacle du véhicule (6),
des secondes données graphiques sont affichées dans une seconde zone (5) de la surface d'affichage (4), les premières données graphiques étant associées aux secondes données graphiques,
une position d'un élément d'un actionnement (19) est détectée dans un espace de détection (17) associé à la seconde zone (5) de la surface d'affichage (4), et
la position de l'élément d'actionnement (19) est associée à une première partie des secondes données graphiques, la première partie des secondes données graphiques étant présélectionnée,
**caractérisé en ce que**
la présélection concerne une sélection d'un jeu de données au sein d'un ensemble de jeux de données qui sont visualisés par les secondes données graphiques dans la seconde zone (5) de la surface d'affichage (4),
des informations sont associées au jeu de données présélectionné et des premières données graphiques sont générées à des fin d'aperçu dans un mode d'affichage dans la première zone (3) de la surface d'affichage (4) en fonction du jeu de données présélectionné, les informations associées au jeu de données présélectionné étant visualisées sous la forme d'un aperçu dans la première zone (3) de la surface d'affichage (4).

2. Procédé de commande selon la revendication 1, **caractérisé en ce que**
la première partie des secondes données graphiques (18-1) est affichée à une position déterminée dans la seconde zone (5) de la surface d'affichage (4), et
une action de commande est détectée, avec laquelle une seconde partie (18-5) des secondes données graphiques est amenée à la position déterminée, la seconde partie (18-5) des secondes données graphiques étant présélectionnée après l'action de commande.

3. Procédé de commande selon la revendication 2, **caractérisé en ce que**
la position déterminée est représentée de manière marquée.

4. Procédé de commande selon l'une des revendications 1 à 3,
**caractérisé en ce que**
les secondes données graphiques comprennent des entrées de liste (14-1, 14-1, 14-3, 18-1 - 18-9) d'une liste (14), la première partie des secondes données graphiques comprenant une première entrée de liste (14-1, 14-1, 14-3, 18-1) et/ou la seconde partie des données graphiques comprenant une seconde entrée de liste (18-5).

5. Procédé de commande selon l'une des revendications 1 à 4,
**caractérisé en ce que**
les secondes données graphiques comprennent des boutons (13) pour des entrées,
des entrées pour les boutons (13) sont détectées par l'intermédiaire de la position de l'élément d'actionnement (19) et
les premières données graphiques sont générées en correspondance avec les entrées.

6. Procédé de commande selon la revendication 5, **caractérisé en ce que**
une carte géographique (15) dotée d'une échelle est affichée dans la première zone (3) de la surface d'affichage (4) et des boutons (13) permettant de fournir une entrée d'un système de navigation (11-1) sont affichés dans la seconde zone (5) de la surface d'affichage (4),
des étapes d'entrée individuelles peuvent être fournies en entrée au moyen des boutons (13), l'ensemble d'occurrences au sein d'un ensemble de jeux de données se modifiant à chaque étape d'entrée individuelle, après chaque étape d'entrée individuelle, des objets (16-1, 16-2, 16-3) du système de navigation (11-1) sont déterminés, ceux-ci résultant des étapes d'entrée individuelles précédentes du processus d'entrée, et l'échelle est modifiée de manière à ce que tous les objets (16-1, 16-2, 16-3) déterminés après chaque étape d'entrée individuelle soient affichés sur la carte géographique (15) .

7. Procédé de commande selon l'une des revendications précédentes,
**caractérisé en ce que**
une première fenêtre (24-2) comportant des boutons pour les entrées est affichée intégralement dans la seconde zone (5) de la surface d'affichage (4) pendant un processus d'entrée,
au moins une seconde fenêtre (24-3) dans laquelle sont contenus des objets graphiques associés aux entrées est affichée sous forme tronquée,
la position de l'élément d'actionnement (19) est associée à l'une des fenêtres (24-1, 24-2, 24-3), et,
lorsque la position est associée à la seconde fenêtre (24-3), la fenêtre affichée de manière tronquée (24-3) est mise en affichage intégral et la première fenêtre (24-2) est mise en affichage tronqué.

8. Procédé de commande selon l'une des revendications précédentes,
**caractérisé en ce que**,
après l'aperçu au moyen des premières données graphiques, la première partie des secondes données graphiques est sélectionnée, les premières données graphiques passant du mode d'affichage à un mode de commande.

9. Procédé de commande selon l'une des revendications 5 à 8,
**caractérisé en ce que**
le moment où l'élément d'actionnement (19) quitte l'espace de détection (17) qui est associé à la seconde zone (5) de la surface d'affichage (4) est détecté, et le bouton (23-3) situé dans la seconde zone (5) de la surface d'affichage (4) qui a été présélectionnée en dernier lieu avant que l'élément d'actionnement (19) ne quitte la zone de détection (17) est sélectionné.

10. Procédé de commande selon l'une des revendications précédentes,
**caractérisé en ce que**
la seconde zone (5) est divisée en au moins deux zones partielles (5-1, 5-2), des boutons (23-1 - 23-4) comportant des éléments de menu étant affichés dans une première zone partielle (5-1),
une position de l'élément d'actionnement (19) est associée à l'un des boutons (23-1 - 23-4) dans la première zone partielle (5-1), le bouton étant présélectionné, et les secondes données graphiques sont générées dans une seconde zone partielle (5-2) en fonction du bouton (23-2, 23-3) présélectionné.

11. Procédé de fonctionnement selon la revendication 10, **caractérisé en ce que**
la première zone partielle (5-1) de la seconde zone (5) est affichée séparément de la seconde zone partielle (5-2) de la seconde zone (5).

12. Système de commande dans un véhicule (6), comportant une zone d'affichage (4) qui est divisée en au moins deux zones (3, 5) dans l'habitacle du véhicule (6), des premières données graphiques pouvant être affichées dans une première zone (3) de la surface d'affichage (4) et des secondes données graphiques pouvant être affichées dans une seconde zone (5) de la surface d'affichage (4), les premières données graphiques étant associées aux secondes données graphiques,
une unité de détection (12) au moyen de laquelle une position d'un élément d'actionnement (19) dans un espace de détection (17) qui est associé à la seconde zone (5) de la surface d'affichage (4) peut être détectée, et une unité de commande (1) au moyen de laquelle la position de l'élément d'actionnement (19) peut être associée à une première partie des secondes données graphiques, la première partie des secondes données graphiques pouvant être présélectionnée,
**caractérisé en ce que**
la présélection concerne une sélection d'un jeu de données au sein d'un ensemble de jeux de données qui peuvent être visualisés par les secondes données graphiques dans la seconde zone (5) de la surface d'affichage (4),
des informations sont associées au jeu de données présélectionné et la première zone (3) de la surface d'affichage (4) peut être commandée au moyen de l'unité de commande (1) de manière à ce que des premières données graphiques puissent être générées à des fins d'aperçu dans la première zone (3) de la surface d'affichage (4) en fonction du jeu de données présélectionné, les informations associées au jeu de données présélectionné pouvant être visualisées sous la forme d'un aperçu dans la première zone (3) de la surface d'affichage (4).

13. Système de commande selon la revendication 12, **caractérisé en ce que**
la première zone (3) de la surface d'affichage (4) est disposée dans l'habitacle du véhicule (6) dans le champ de vision d'un utilisateur (9) qui est assis sur le siège du conducteur (25) ou du passager du véhicule (6), et la seconde zone (5) de la surface d'affichage (4) est disposée à portée de main de l'utilisateur (9).

14. Véhicule (6) comportant un système de commande selon l'une des revendications 12 ou 13.
